# EUROPEAN PATENT APPLICATION

(11) **EP 4 776 106 A1**
(43) Date of publication of application: **15.07.2026**
(21) Application number: 25178682.8
(22) Date of filing: 26.05.2025
(51) Int. Cl.: G06F 3/041, G06F 3/044

(54) **TOUCH DISPLAY DRIVING DEVICE AND TOUCH DISPLAY DRIVING METHOD**

(30) Priority: 09.01.2025 KR 20250003748
(71) Applicant: LX Semicon Co., Ltd., Daejeon 34027 (KR)
(72) Inventor: JANG, Moon Ho, 34027 Daejeon (KR); HUANG, Dean Yuan, 34027 Daejeon (KR)
(74) Representative: Goddar, Heinz J.

(57) **Abstract**

A touch display driving device according to an aspect of the disclosure capable of maintaining a touch report rate at a constant level in a variable refresh rate mode in which a display refresh rate varies includes: a timing controller that generates a first touch synchronization signal including a first touch scan period and a display driving period when operating in a default mode in which a display refresh rate is a first frequency, and a second touch synchronization signal including a first touch scan period, a display driving period, a second touch scan period, and a dummy blank period when operating in a variable refresh rate mode in which the display refresh rate decreases from the first frequency to a second frequency; a touch driver that performs a touch scan during the first and second touch scan periods to generate touch raw data; and a touch micro controller unit that generates touch coordinates based on the touch raw data and reports the generated touch coordinates according to the touch report rate.

## Description

### CROSS-REFERENCE TO RELATED APPLICATIONS

This application claims the benefit of the Korean Patent Application No. 10-2025-0003748 filed on January 09, 2025 which is hereby incorporated by reference as if fully set forth herein.

### BACKGROUND

### Field of the Invention

The present disclosure relates to a display device, and more specifically, to an in-cell type touch display.

### Discussion of the Related Art

As informatization progresses, various display devices capable of visualizing information are being developed. A liquid crystal display (LCD) device, an organic light-emitting diode (OLED) display device, a plasma display panel (PDP) display device, and the like are display devices which have been developed or are being developed. These display devices are evolving to be able to properly display high-resolution images.

Display panels configured in various electronic devices (for example: a television (TV), a notebook, a mobile device, and the like) frequently employ touch functions. In this case, the display panel may be implemented as a flat panel display device, and the touch function may be implemented by a touch panel combined with the display panel. The touch panel means a panel having a function of operating an electronic device or executing a program when a user presses text, images, icons, or the like using a finger or stylus pen.

The touch panel may be, for example, configured to perform touch recognition in a capacitive manner, and a "mutual capacitance-type touch sensing device" has been proposed as an example of a touch panel which implements capacitive touch recognition. For example, the touch panel has an independent configuration from the display panel and may be manufactured separately and combined with the display panel. As described above, the configuration in which the touch panel and the display panel are combined causes various difficulties such as process complexity, an increase in manufacturing costs, and the like.

To this end, the development of a device in which components for a display and components for touch recognition may be shared is being promoted, and an in-cell method is a representative example. The in-cell method means implementing touch recognition by having a configuration in which pixels of the display panel implement the touch function. The pixels implemented in an in-cell method perform both display and touch recognition. For example, in a device providing both a touch function and a display function (hereinafter, referred to as a "touch display device"), a touch operation and a display operation may operate in a time-division manner by a display driving signal and a touch driving signal.

According to one embodiment, the touch display device may operate in a variable refresh rate (VRR) mode which reduces power consumption or varies a display refresh rate (or a display frame rate) depending on the type of image output through the touch display device.

However, there is a problem that a touch report rate (or a touch scan rate) varies and thus touch performance may deteriorate when the display refresh rate of the touch display device varies.

### SUMMARY

The present disclosure is intended to solve the above-described problems, and is directed to providing a touch display driving device and a touch display driving method capable of maintaining a touch report rate at a constant level in a variable refresh rate mode in which a display refresh rate varies.

Further, the present disclosure is directed to providing a touch display driving device and a touch display driving method capable of stably maintaining a touch report rate even when a degree of variation in a display refresh rate is small.

A touch display driving device according to one aspect of the present disclosure for achieving the above-described technical problems includes: a timing controller that generates a first touch synchronization signal including a first touch scan period and a display driving period when operating in a default mode in which a display refresh rate is a first frequency, and a second touch synchronization signal including the first touch scan period, the display driving period, a second touch scan period, and a dummy blank period when operating in a variable refresh rate mode in which the display refresh rate decreases from the first frequency to a second frequency; a touch driver that performs a touch scan during the first and second touch scan periods to generate touch raw data; and a touch micro controller unit that generates touch coordinates based on the touch raw data and reports the generated touch coordinates according to a touch report rate.

A touch display driving method according to one aspect of the present disclosure for achieving the above-described technical problems includes: generating a first touch synchronization signal including a first touch scan period and a display driving period when operating in a default mode in which a display refresh rate is a first frequency; performing a touch scan during the first touch scan period to generate touch coordinates, and reporting the touch coordinates according to a touch report rate; generating a second touch synchronization signal including the first touch scan period, the display driving period, a second touch scan period, and a dummy blank period when operating in a variable refresh rate mode in which the display refresh rate changes from the first frequency to a second frequency; and performing a touch scan during the first and second touch scan periods to generate touch coordinates and reporting the touch coordinates according to the touch report rate.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure. In the drawings:
FIG. 1 is a block diagram of a touch display system including a touch display driving device according to one embodiment of the present disclosure;
FIG. 2 is a view schematically showing an example of an in-cell touch type panel using a mutual capacitance method;
FIG. 3 is a view schematically showing an example of an in-cell touch type panel using a self-capacitance method;
FIG. 4 is a block diagram schematically showing a configuration of a timing controller shown in FIG. 1;
FIG. 5 is a view showing a timing of a general touch synchronization signal when a display refresh rate is a first frequency;
FIG. 6 is a view showing a timing of a general touch synchronization signal when the display refresh rate changes from the first frequency to a second frequency;
FIG. 7 is a view showing a timing of a first touch synchronization signal according to a first embodiment of the present disclosure when the display refresh rate is the first frequency;
FIG. 8 is a view showing a timing of a second touch synchronization signal according to a second embodiment of the present disclosure when the display refresh rate changes from the first frequency to the second frequency;
FIG. 9 is a view showing a timing of a second touch synchronization signal according to a third embodiment of the present disclosure when the display refresh rate changes from the first frequency to the second frequency;
FIG. 10 is a view showing a timing of a second touch synchronization signal according to a fourth embodiment of the present disclosure when the display refresh rate changes from the first frequency to the second frequency;
FIG. 11 is a view showing a timing of a second touch synchronization signal according to a fifth embodiment of the present disclosure when the display refresh rate changes from the first frequency to the second frequency; and
FIG. 12 is a view showing a timing of a second touch synchronization signal according to a sixth embodiment of the present disclosure when the display refresh rate changes from the first frequency to the second frequency.

### DETAILED DESCRIPTION OF THE DISCLOSURE

Advantages and features of the present disclosure, and implementation methods thereof will be clarified through following exemplary embodiments described with reference to the accompanying drawings. The present disclosure can, however, be embodied in different forms and should not be construed as limited to the exemplary embodiments set forth herein. Rather, these exemplary embodiments are provided so that this disclosure will be thorough and complete, and will fully convey the scope of the present disclosure to those skilled in the art. Further, the present disclosure is only defined by scopes of claims.

Throughout the present disclosure, identical reference numerals refer to substantially identical elements. In the following description, when the detailed description of the relevant known function or configuration is determined to unnecessarily obscure the important point of the present disclosure, the detailed description will be omitted. In addition, the names of the elements used in the description below are examples and can differ from the names of the actual product corresponding to the elements.

In a case where 'comprise,' 'have,' and 'include' described in the present disclosure are used, another part can be added. The terms of a singular form can include plural forms unless referred to the contrary.

In construing an element, the element is construed as including an error range although there is no explicit description.

It will be understood that, although the terms "first", "second", etc. can be used herein to describe various elements, these elements should not be limited by these terms. These terms are only used to distinguish one element from another. Accordingly, a first element mentioned hereinafter could be termed a second element without departing from the scope of the present disclosure.

The term "at least one" should be understood as including any and all combinations of one or more of the associated listed items. For example, the meaning of "at least one of a first item, a second item, and a third item" denotes each of the first item, the second item, and the third item as well as the combination of all items proposed from two or more of the first item, the second item, and the third item.

Features of various exemplary embodiments of the present disclosure can be partially or overall coupled to or combined with each other and can be variously inter-operated or combined with each other and driven technically as those skilled in the art can sufficiently understand. The exemplary embodiments of the present disclosure can be carried out independently from each other, or can be carried out together in co-dependent relationship.

Hereinafter, exemplary embodiments of the present disclosure will be described in detail with reference to the accompanying drawings.

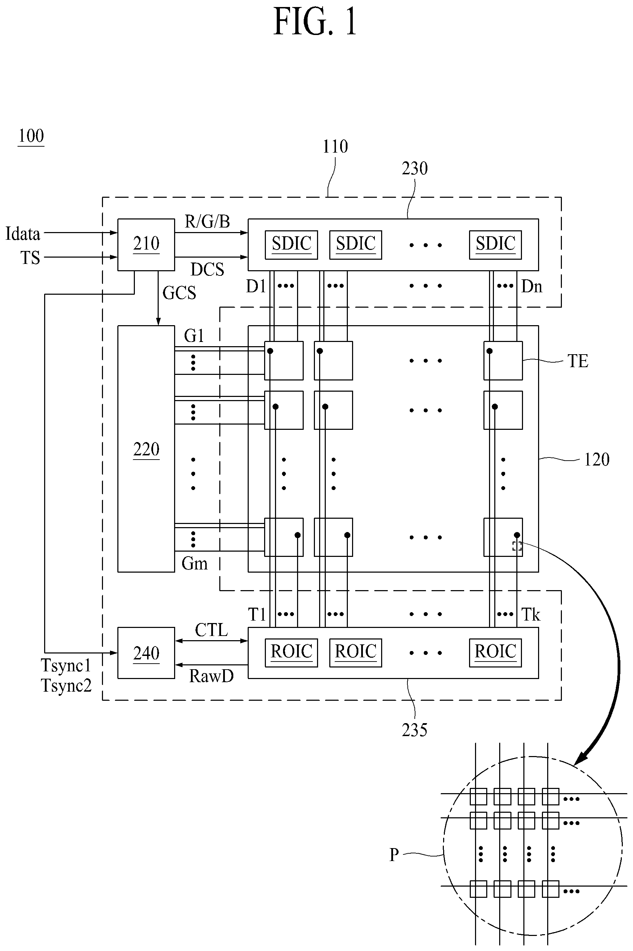

FIG. 1 is a block diagram of a touch display system including a touch display driving device according to one embodiment of the present disclosure. A touch display system 100 shown in FIG. 1 performs display and a touch scan (or touch sensing) in a time-division method, and although components for the display and components for the touch scan may be shared in an embedded in-cell method, the present embodiments are not limited to the time-division method or in-cell method. For example, the touch display driving device of the embodiments described below may also be implemented in an on-cell method of an external method or embedded method.

According to various embodiments, the display and touch scan of the touch display driving device may be implemented as separate operations. Here, the display means expressing a desired image by driving pixels on a display panel, and the touch scan means recognizing a touch position on the display panel. Further, the time-division method means that the display and touch recognition are sequentially performed in an alternating manner by time domain. In one embodiment, the touch scan may be performed during a vertical blank period within one frame period.

The in-cell method means being implemented so that the display and the touch scan may be simultaneously performed on the pixels in the display panel, and to this end, a shared component capable of providing capacitance for the touch scan may be used and may at least include a connection point of the component. An example of the connection point may be a node (COM) which applies a common voltage, but is not limited thereto, and various components may be used as the connection point according to the intention of the manufacturer.

Meanwhile, the touch display system 100 according to the present disclosure may be used in a smartphone, tablet, notebook, or the like, and may provide a thin and lightweight design and implement a high-definition screen. According to the embodiment, the touch display system 100 according to the present disclosure may be a vertical blank (VBS) system.

The touch display system 100 of the present disclosure may operate in a default mode which operates at one fixed frequency, and a variable refresh rate (VRR) mode which varies between a plurality of frequencies depending on the type of image data Idata input from a host. The variable refresh rate mode may be mainly used to prevent screen tearing or stuttering in tasks with inconsistent graphics loads such as a game, video playback, or the like.

In one embodiment, the touch display system 100 according to embodiments of the present disclosure may display general image data such as a TV image at one fixed frequency according to the default mode, and display special image data such as a game image or movie at a varied frequency according to the variable refresh rate mode. However, the image data output in the default mode and the image data output in the variable refresh rate mode may be changed in various ways, and the image data mentioned herein corresponds to some examples.

The operation mode, which is distinguished according to whether the frequency of displaying the image data varies, may be expressed as various terms in addition to the default mode and the variable refresh rate mode.

Meanwhile, when the touch display system 100 of the present disclosure is changed from the default mode to the variable refresh rate mode, one horizontal period (1H) is fixed to the same value to display a stable image, and a length of one frame (1 Frame) may be adjusted by varying a vertical blank period Vblank. In this case, the vertical blank period before variation is described as a vertical blank, and the vertical blank period increased due to the variation in the vertical blank period is described as a dummy blank period.

The touch display system 100 according to one embodiment of the present disclosure performs a display function and a touch scan function, and may be implemented as a flat panel display such as a liquid crystal display (LCD) or an organic light emitting diode display (OLED).

As shown in FIG. 1, the touch display system 100 according to one embodiment of the present disclosure includes a touch display driving device 110 and a panel 120 (hereinafter, described as a concept including a touch screen and a display panel). The touch display driving device 110 may include a timing controller 210, a gate driver 220, a data driver 230, a touch driver 235, and a touch micro controller unit 240. Although the touch micro controller unit 240 and the touch driver 235 are shown as separate components in FIG. 1, the touch driver 235 and the touch micro controller unit 240 may be implemented as a single chip.

The panel 120 displays a certain gray level image or receives a touch input from a hand (or a finger) or a stylus pen (or an electronic pen). A plurality of data lines D1 to Dn connected to the data driver 230 and a plurality of gate lines G1 to Gm connected to the gate driver 220 may be formed on the panel 120. For example, the plurality of data lines D1 to Dn may be disposed in rows or columns, and the plurality of gate lines G1 to Gm may be disposed in columns or rows. Hereinafter, for convenience of description, it is assumed that the plurality of data lines D1 to Dn are disposed in rows and the plurality of gate lines G1 to Gm are disposed in columns.

Further, a plurality of pixels P may be defined at intersecting points of the plurality of data lines D1 to Dn and the plurality of gate lines G1 to Gm.

Each pixel P may be composed of red (R), green (G), blue (B), and white (W) sub-pixels. In one embodiment, each sub-pixel may be repeatedly formed in a row direction or may be formed in a 2*2 matrix form. In this case, a color filter corresponding to each color is disposed in each of the red (R), green (G), and blue (B) sub-pixels, whereas no separate color filter is disposed in the white (W) sub-pixel. In one embodiment, the red (R), green (G), blue (B), and white (W) sub-pixels may be formed to have the same area ratio, but the red (R), green (G), blue (B), and white (W) sub-pixels may also be formed to have different area ratios.

Each of the plurality of pixels P may be a liquid crystal display (LCD) pixel or an organic light-emitting diode (OLED) pixel, but is not limited thereto.

In one embodiment, the panel 120 may be a panel having an in-cell touch type structure using a capacitance method. According to the embodiment, the components for the display and the components for the touch scan may be shared in an in-cell method. For example, touch electrodes TE for detecting a touch on a touch screen may be used as common voltage electrodes to which a common voltage is supplied from the display panel. Although an in-cell type panel is known as an integrated form in which the display panel and the touch screen are combined, this is only an example of the panel 120 described above, and the panel to which the present disclosure is applied is not limited to the in-cell type panel.

In one embodiment, the panel 120 may be an in-cell touch type panel using a self-capacitance method or an in-cell touch type panel using a mutual capacitance method.

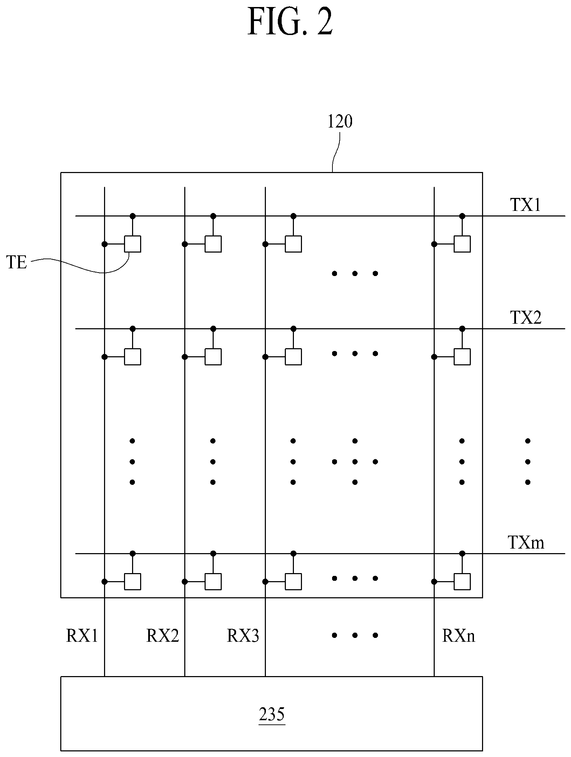

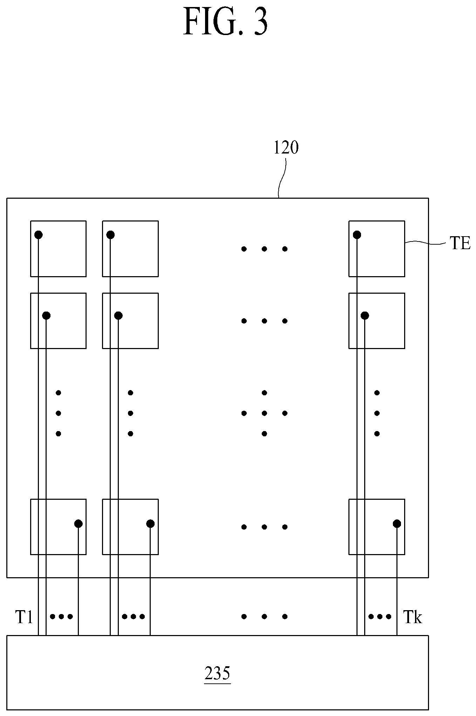

Hereinafter, referring to FIGS. 2 and 3, the in-cell touch type panel using a mutual capacitance method and the in-cell touch type panel using a self-capacitance method will be described in more detail.

FIG. 2 is a view schematically showing an example of an in-cell touch type panel using a mutual capacitance method.

As shown in FIG. 2, the panel 120 includes touch driving lines TX1 to TXm (m is a natural number greater than or equal to 2), a plurality of touch electrodes TE, and touch sensing lines RX1 to RXn (n is a natural number greater than or equal to 2).

The touch driving lines TX1 to TXm transmit touch driving signals to each of the touch electrodes TE. Each touch electrode TE may include a mutual capacitor. The touch sensing lines RX1 to RXn transmit voltages (or charges) of each of the touch electrodes TE to the touch driver 235.

The touch sensing lines RX1 to RXn may mean sensing lines of the panel 120 and may also be referred to as touch sensing channels.

FIG. 3 is a view schematically showing an example of an in-cell touch type panel using a self-capacitance method. In the self-capacitance touch method, which is another type of capacitive touch method, the supply of the touch driving signal and the reception of the capacitance generated by a user's touch or a touch of a stylus pen are implemented through one touch line among touch lines T1 to Tk.

In this self-capacitance touch method, a value sensed at the corresponding touch electrode (TE) changes depending on the touch or proximity of an object such as a finger, pen, or the like, and the self-capacitance touch method may detect the presence or absence of the touch, touch coordinates, or the like using the sensed value.

Referring to FIG. 1 again, the panel 120 may operate in a display driving mode and a touch scan mode. The panel 120 may display an image during the display driving mode and serve as a touch panel for a touch scan during the touch scan mode.

The timing controller 210 controls the operation of the data driver 230, the gate driver 220, the touch driver 235, and the touch micro controller unit 240 so that the display and touch scan are executed in a time-division method.

The timing controller 210 starts a scan according to a timing implemented in each frame, converts image data Idata input from the outside into a data signal format used by the data driver 230, outputs the converted image data (R/G/B), and controls data driving according to the scan.

The timing controller 210 controls the data driver 230 and the gate driver 220 for display. The timing controller 210 may control the data driver 230 and the gate driver 220 by supplying various control signals DCS and GCS required for the driving operation of the data driver 230 and the gate driver 220.

The timing controller 210 receives various timing signals TS including a vertical synchronization signal Vsync, a horizontal synchronization signal Hsync, an input data enable (DE) signal, a clock signal CLK, and the like along with the image data (R/G/B) from the outside (for example, a host system).

The timing controller 210 converts the image data Idata input from the outside into the data signal format used by the data driver 230 and outputs the converted image data (R/G/B), and additionally, in order to control the data driver 230 and the gate driver 220, the timing controller 210 receives the timing signals TS such as the vertical synchronization signal Vsync, the horizontal synchronization signal Hsync, the input data enable (DE) signal, the clock signal CLK, and the like, generates various control signals, and outputs the various control signals to the data driver 230 and the gate driver 220.

The timing controller 210 may be implemented as a component which is separate from the data driver 230, or may be integrated with the data driver 230 and implemented as an integrated circuit.

The timing controller 210 may generate a touch synchronization signal Tsync and transmit the touch synchronization signal Tsync to the touch driver 235 and the touch micro controller unit 240 to control the touch operation. The touch synchronization signal Tsync defines a display driving period in which the image is displayed and a touch scan period in which the touch scan is performed. In one embodiment, a period in which the touch synchronization signal Tsync is maintained at a first level (for example, a low level L) may be defined as a touch scan period TST, and a period in which the touch synchronization signal Tsync is maintained at a second level (for example, a high level H) may be defined as a display driving period DDT.

In particular, according to the present disclosure, the timing controller 210 may selectively generate any one of a first touch synchronization signal Tsync1 and a second touch synchronization signal Tsync2 depending on the operation mode of the touch display system 100. Specifically, the timing controller 210 may generate the first touch synchronization signal Tsync1 when the touch display system 100 operates in a default mode in which a display refresh rate DRR is a first frequency (for example, 120 Hz), and generate the second touch synchronization signal Tsync2 when the touch display system 100 operates in a variable refresh rate mode in which the display refresh rate decreases from the first frequency to a second frequency (for example, 119 Hz, 60 Hz, 30 Hz, 20 Hz, and the like.).

According to the embodiment, the first touch synchronization signal Tsync1 may include a first touch scan period TST1 and the display driving period DDT. The second touch synchronization signal Tsync2 may further include a second touch scan period TST2 and a dummy blank period DBLANK in addition to the first touch scan period TST1 and the display driving period DDT. In this case, as described above, the dummy blank period DBLANK means a vertical blank period added to the vertical blank period before the display refresh rate varies to stably display images.

Since the timing controller 210 according to the present disclosure generates the second touch synchronization signal Tsync2 additionally including the second touch scan period TST2 when the touch display system 100 operates in the variable refresh rate mode, and thus touch coordinates may be generated by additionally performing a touch scan during the second touch scan period TST2, even when a display report rate decreases from the first frequency to the second frequency, a touch report rate may be maintained at the first frequency as in the default mode.

Meanwhile, the timing controller 210 according to the present disclosure may further include a preamble period PA maintained at the second level for a predetermined time before the first or second touch scan period TST1 or TST2 included in the first or second touch synchronization signal Tsync1 or Tsync2.

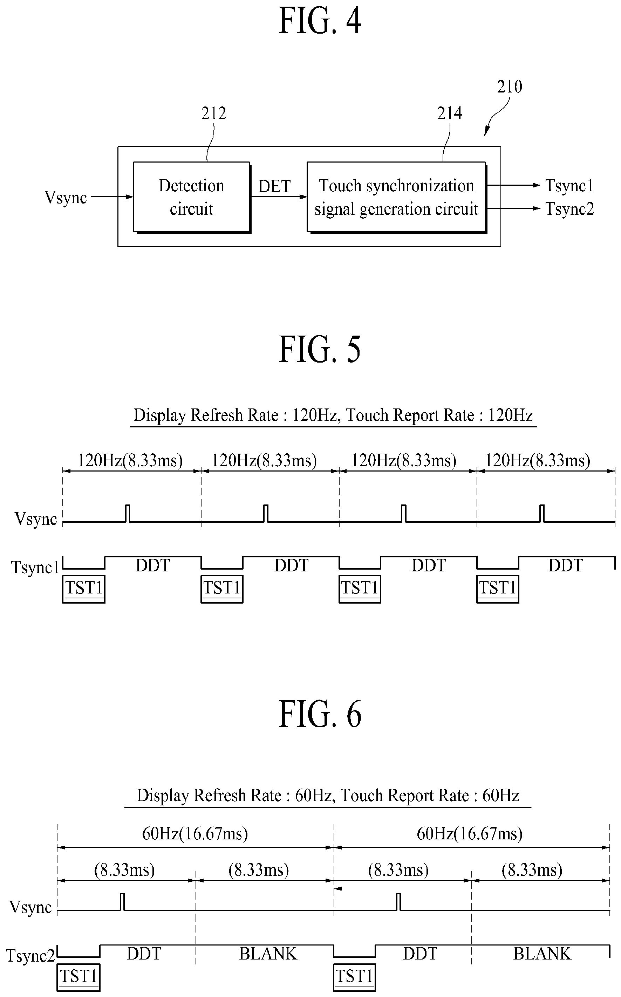

In order to generate the above-described first and second touch synchronization signals Tsync1 and Tsync2, the timing controller 210 may include a detection circuit 212 and a touch synchronization signal generation circuit 214, as shown in FIG. 4. Although the detection circuit 212 and the touch synchronization signal generation circuit 214 are shown as hardware-type configurations in FIG. 4, the detection circuit 212 and the touch synchronization signal generation circuit 214 may also be implemented in the form of software executed by the timing controller 210.

Further, only the configurations required to generate a touch synchronization signal are shown in FIG. 4, and the timing controller 210 may further include other configurations for controlling the gate driver 220 and the data driver 230.

The detection circuit 212 detects the display refresh rate based on the vertical synchronization signal Vsync and generates a detection signal DET. In one embodiment, the detection signal DET may include at least one of information on the display refresh rate having the first frequency or information on the display refresh rate having the second frequency, which may be processed by the touch synchronization signal generation circuit 214.

Further, in order to determine whether the preamble period PA is included, the detection circuit 212 may calculate a difference between the first frequency and the second frequency and transmit the calculated result to the touch synchronization signal generation circuit 214.

The touch synchronization signal generation circuit 214 generates the touch synchronization signal Tsync based on the detection signal DET. Specifically, the touch synchronization signal generation circuit 214 generates the first touch synchronization signal Tsync1 when it is determined that the display refresh rate is the first frequency based on the detection signal DET, and generates the second touch synchronization signal Tsync2 when it is determined that the display refresh rate decreases from the first frequency to the second frequency.

The touch synchronization signal generation circuit 214 generates a second touch synchronization signal Tsync2 different from the first touch synchronization signal Tsync1 based on the detection signal DET so that the touch report rate may be maintained at the first frequency even when the display refresh rate decreases from the first frequency to the second frequency.

As shown in FIGS. 5 to 12, the first touch synchronization signal Tsync1 sequentially includes the first touch scan period TST1 and the display driving period DDT, and the second touch synchronization signal Tsync2 sequentially includes the first touch scan period TST1, the display driving period DDT, the second touch scan period TST2, and the dummy blank period DBLANK. In this case, the first touch scan period TST1 and the second touch scan period TST2 may mean periods corresponding to or synchronized with the vertical blank period, and the dummy blank period DBLANK may correspond to a period in which the image is displayed at the first frequency. During the vertical blank periods (for example, periods corresponding to the first and second touch scan periods TST1 and TST2) and the dummy blank period DBLANK, the previously displayed image may be maintained.

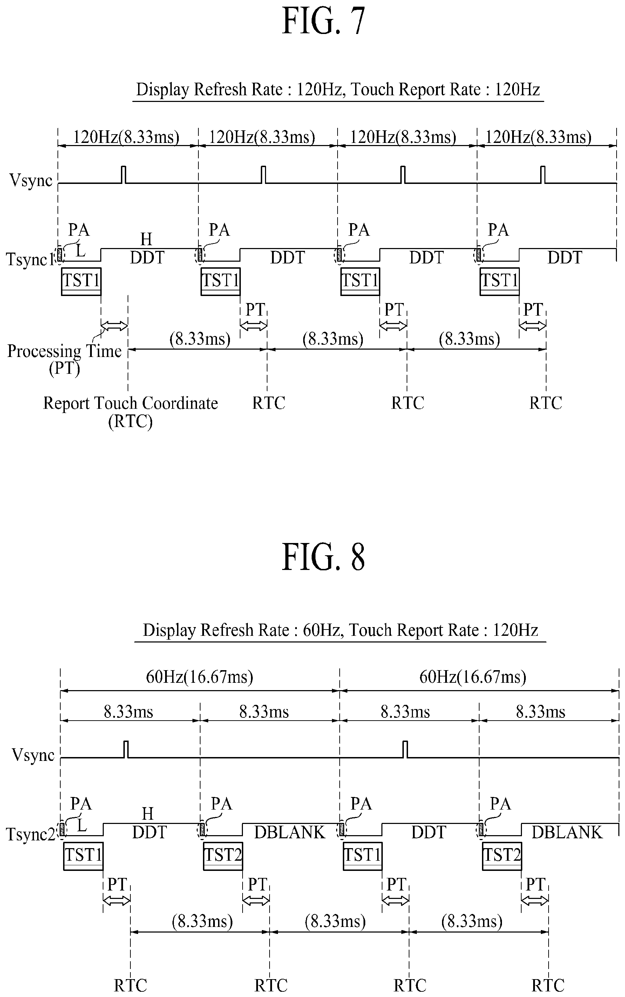

As can be seen in FIGS. 5 and 7, the first touch synchronization signal Tsync1 may be at the first level (for example, the low level) during the first touch scan period TST1, and the display driving period DDT may be at the second level (for example, the high level). Further, as can be seen in FIG. 6 and FIGS. 8 to 12, the second touch synchronization signal Tsync2 may be at the first level (for example, the low level) during the first touch scan period TST1 and the second touch scan period TST2, and the display driving period DDT and the dummy blank period DBLANK may be at the second level (for example, the high level).

Meanwhile, as shown in FIGS. 7 to 12, the second touch synchronization signal Tsync2 may further include a preamble period PA maintained at the second level for a predetermined time before the first and second touch scan periods TST1 and TST2. Although FIGS. 7 to 12 show that the second touch synchronization signal Tsync1 always includes the preamble period PA, this is only an example, and the preamble period PA may be selectively included in the second touch synchronization signal Tsync2.

In one embodiment, the preamble period PA may be included in the second touch synchronization signal Tsync2 when a difference between the first frequency and the second frequency is less than or equal to a reference value. In the present disclosure, the preamble period PA is included in the second touch synchronization signal Tsync2 when the difference between the first frequency and the second frequency is less than or equal to the reference value because the dummy blank period DBLANK is set very short when the difference between the first frequency and the second frequency is small, and thus the second touch scan period TST2 of a current frame and the first touch scan period TST1 of a next frame may not be distinguished.

For example, when the display refresh rate changes from 120 Hz to 119 Hz, since the difference between the first frequency and the second frequency is small, the dummy blank period DBLANK is set very short. Accordingly, the touch synchronization signal generation circuit 214 includes the preamble period PA before the first and second touch scan periods TST1 and TST2 to distinguish the second touch scan period TST2 of the current frame from the first touch scan period TST1 of the next frame.

In another example, when the display refresh rate changes from 120 Hz to 60 Hz or when the display refresh rate changes from 120 Hz to 30 Hz, since the difference between the first frequency and the second frequency is large, the dummy blank period DBLANK may be set to a sufficient length. Accordingly, since the second touch scan period TST2 of the current frame and the first touch scan period TST1 of the next frame may be clearly distinguished due to the dummy blank period DBLANK, the touch synchronization signal generation circuit 214 may not include the preamble period PA in the second touch synchronization signal Tsync2.

The preamble period PA may be shorter than the first and second touch scan periods TST1 and TST2, and the first and second touch scan periods TST1 and TST2 may be shorter than the display driving period DDT.

Meanwhile, during the preamble period PA, an image corresponding to new image data is not output, and an image of the previous frame which is being output to the panel 120 may be maintained.

The touch synchronization signal generation circuit 214 may transmit the first and second touch synchronization signals Tsync1 and Tsync2 to the touch micro controller unit 240 or the touch driver 235.

In one embodiment, the touch synchronization signal generation circuit 214 may transmit the first and second touch synchronization signals Tsync1 and Tsync2 through general purpose input/output (GPIO) pins. According to the embodiment, at least one of the timing controller 210, the touch driver 235, and the touch micro controller unit 240 may include GPIO pins for transmitting or receiving the first and second touch synchronization signals Tsync1 and Tsync2.

Referring to FIG. 1 again, the gate driver 220 supplies a scan signal to the gate lines G1 to Gm to turn on and off a switch (for example, a transistor) located at each pixel P. The gate driver 220 may be located on only one side of the panel 120 as shown in FIG. 1, or may be divided into two and located on both sides of the panel 120 depending on the driving method.

The gate driver 220 may include at least one gate driver integrated circuit. At least one gate driver integrated circuit may be connected to a bonding pad of the panel 120 in a tape automated bonding (TAB) method or a chip on glass (COG) method, or may be implemented as a gate in panel (GIP) type and formed directly on the panel 120, and in some cases, may be formed by being integrated into the panel 120. Further, the gate driver 230 may be implemented in a chip on film (COF) method.

The gate driver 220 may receive a gate control signal GCS, generate a gate driving signal corresponding to the gate control signal GCS, and provide the gate driving signal to the pixels P of the panel 120. The gate driver 220 may include an input buffer, a shift register, a level shifter, and an output buffer according to one embodiment. The input buffer may receive the gate control signal GCS and output the gate control signal GCS to the shift register, and the shift register may control a scan pulse, which is a gate signal transmitted through the input buffer, to be sequentially generated in units of columns of the panel 120. The level shifter has a function of changing an output voltage level of the shift register to have a level capable of turning on and off a thin film transistor (TFT) configured as a switch, and the output buffer may change a signal output from the level shifter and output the signal as a gate driving signal capable of driving the gate lines G1 to Gm having an RC load.

The data driver 230 supplies data voltage to the data lines DL to display an image on each pixel P of the panel 120. The data driver 230 may include at least one source driver integrated circuit (SDIC). At least one SDIC may be connected to the bonding pad of the panel 120 in a tape automated bonding (TAB) method or a chip on glass (COG) method, or may be formed directly on the panel 120, and in some cases, may be formed by being integrated into the panel 120. Further, the data driver 230 may be implemented in a chip on film (COF) method.

At least one SDIC may be configured to generate a source driving signal based on a data control signal DCS and provide the source driving signal to the pixels P of the panel 120. The SDIC may typically include a latch, a digital-to-analog converter, and an output buffer. Here, the latch stores image data according to the display control signal and provides the image data to the digital-to-analog converter, and the digital-to-analog converter may output an analog signal of a voltage corresponding to the input image data. The output buffer may transmit the output of the digital-to-analog converter as a source driving signal to the pixels P of the panel 120 through the data lines D1 to Dn.

In one embodiment, the SDIC displays an image corresponding to the image data (R/G/B) input from the timing controller 210 during the display driving period DDT in which the first touch synchronization signal Tsync1 is at the second level (a high level) within one frame period when the touch display system 100 operates in the default mode in which the display refresh rate is the first frequency. During the first touch scan period TST1 in which the first touch synchronization signal Tsync1 is at the first level (a low level) within one frame period, the SDIC maintains the image being output in the previous frame.

Thereafter, the SDIC displays an image corresponding to image data (R/G/B) input from the timing controller 210 during the display driving period DDT in which the second touch synchronization signal Tsync2 is at the second level (the high level) within one frame period when the touch display system 100 operates in the variable refresh rate mode in which the display refresh rate decreases to the second frequency. During the preamble period PA and the dummy blank period DBLANK in which the second touch synchronization signal Tsync2 is at the second level (the high level) within one frame period, the SDIC maintains the image being output in the previous frame. Further, during the first and second touch scan periods TST1 and TST2 in which the second touch synchronization signal Tsync2 is at the first level (the low level) within one frame period, the SDIC maintains the image being output in the previous period.

The touch driver 235 processes the response signals output from a plurality of touch electrodes TE included in the panel 120 during the first and second touch scan periods TST1 and TST2 (for example, performs analog to digital conversion) based on the control signals CTL transmitted from the touch micro controller unit 240 to generate touch raw data RawD. The touch driver 235 transmits the generated touch raw data RawD to the touch micro controller unit 240.

The touch micro controller unit 240 may generate the control signals CTL for controlling the operation of the touch driver 235 based on the first and second touch synchronization signals Tsync1 and Tsync2. Further, the touch micro controller unit 240 may calculate touch coordinates RTC using the touch raw data RawD transmitted from the touch driver 235 and transmit the calculated touch coordinates RTC to the host according to the touch report rate.

In one embodiment, the touch micro controller unit 240 according to the present disclosure may transmit the touch coordinates RTC to the host according to a constant touch report rate regardless of the variation in the display refresh rate. That is, when the display refresh rate is the first frequency, the touch micro controller unit 240 transmits the touch coordinates RTC to the host according to the touch report rate according to the first frequency. Further, even when the display refresh rate changes from the first frequency to the second frequency, since the touch driver 235 performs a touch scan according to the first frequency, the touch micro controller unit 240 may transmit the touch coordinates RTC to the host according to the touch report rate according to the first frequency.

Hereinafter, referring to FIGS. 5 to 12, examples of a waveform of the touch synchronization signal and the touch report rate according to the variation in the display refresh rate will be described.

FIG. 5 is a view showing a timing of a general touch synchronization signal when the display refresh rate is the first frequency, and FIG. 6 is a view showing a timing of a general touch synchronization signal when the display refresh rate changes from the first frequency to the second frequency. In FIG. 5, it is assumed that the first frequency is 120 Hz, and in FIG. 6, it is assumed that the second frequency is 60 Hz.

Referring to FIGS. 5 and 6, in the case of a general in-cell type touch display system, since the display and the touch scan may be simultaneously performed on the pixels within the panel 120, the first touch scan period TST1 and the display driving period DDT are divided at a specific ratio and operated during one frame time. Accordingly, the first touch synchronization signal Tsync1 includes the first touch scan period TST1 maintained at the first level and the display driving period DDT maintained at the second level.

As shown in FIG. 6, when the display refresh rate decreases from the first frequency to the second frequency, the second touch synchronization signal Tsync2 further includes the dummy blank period DBLANK maintained at the second level (the high level) to replace the first touch scan period TST1 and the display driving period DDT where the image is output according to the first frequency with the dummy blank period DBLANK. Accordingly, as the driving frequency of the first touch scan period TST1 decreases from the first frequency to the second frequency, the touch report rate also decreases from the first frequency to the second frequency.

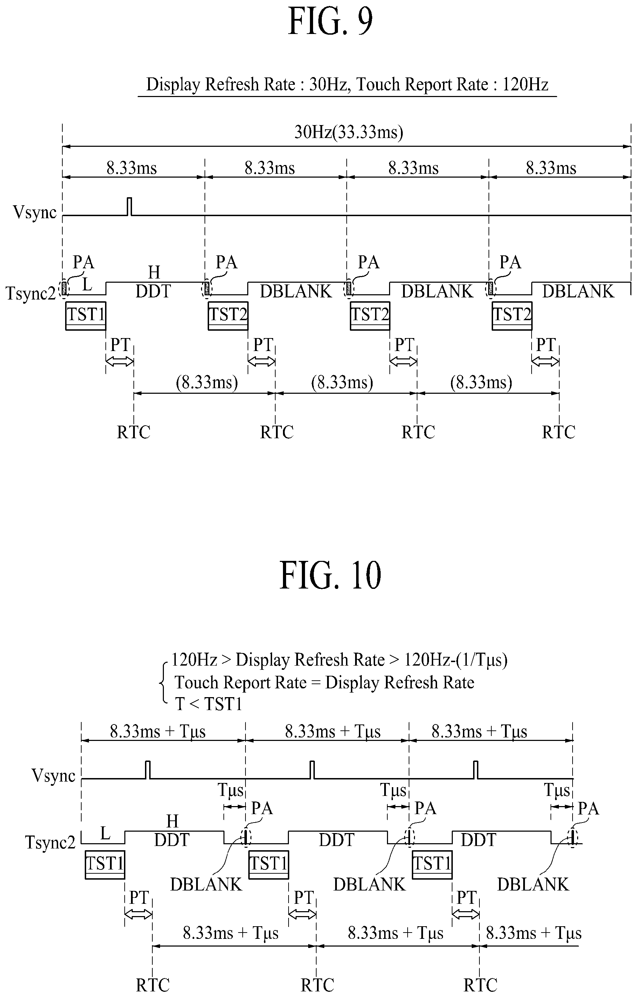

Accordingly, in order to solve the above-described problem, as shown in FIGS. 8 and 9, the touch display system 200 according to the present disclosure may generate a second touch synchronization signal Tsync2 additionally including a second touch scan period TST2 maintained at the first level in addition to the first touch scan period TST1 maintained at the first level, so that even when the display refresh rate decreases from the first frequency to the second frequency, the touch report rate may be maintained at the first frequency.

FIG. 7 is a view showing a timing of a first touch synchronization signal according to a first embodiment of the present disclosure when the display refresh rate is the first frequency.

In FIG. 7, unlike FIG. 5, a first touch synchronization signal Tsync1 generated by the touch synchronization signal generation circuit 214 may include a preamble period PA maintained at the second level before the first touch scan period TST1 maintained at the first level. As described above, when the dummy blank period DBLANK is set short, the preamble period PA is provided to distinguish the first touch scan period TST1 from the second touch scan period TST2, but as shown in FIG. 7, the first touch synchronization signal Tsync1 may include the preamble period PA maintained at the second level before the first touch scan period TST1. According to the first embodiment, the touch driver 235 may maintain the touch scan period at a constant level regardless of the display frame rate, thereby enhancing the ease of touch control.

Further, as shown in FIG. 7, the touch micro controller unit 240 may generate control signals CTL capable of controlling the operation of the touch electrodes TE of the panel 120 during the first touch scan period TST1 included in the first touch synchronization signal Tsync1 and output the control signals CTL to the touch driver 235, and the touch driver 235 may generate touch raw data RawD using response signals corresponding to the user's touch on the touch electrodes TE and output the touch raw data RawD to the touch micro controller unit 240.

The touch micro controller unit 240 may generate touch coordinates RTC based on the touch raw data RawD and transmit the touch coordinates RTC to the host according to the touch report rate having the first frequency.

Referring to FIG. 7, a processing time PT is a time for the touch driver 235 to generate the touch raw data RawD or a time for the touch micro controller unit 240 to calculate the touch coordinates RTC, and the touch micro controller unit 240 reports the touch coordinates RTC to the host according to the touch report rate having the first frequency for each time point at which the processing time PT elapses after the end of the first touch scan period TST1.

FIG. 8 is a view showing a timing of a second touch synchronization signal according to a second embodiment of the present disclosure when the display refresh rate changes from the first frequency to the second frequency. In FIG. 8, it is assumed that the first frequency is 120 Hz and the second frequency is 60 Hz.

As shown in FIG. 8, when the display refresh rate decreases from 120 Hz to 60 Hz, the touch synchronization signal generation circuit 214 generates a second touch synchronization signal Tsync2 including a preamble period PA having the second level (the high level), a first touch scan period TST1 having the first level (the low level), a display driving period DDT having the second level (the high level), a preamble period PA having the second level (the high level), a second touch scan period TST2 having the first level (the low level), and a dummy blank period DBLANK having the second level (the high level).

Accordingly, the touch driver 235 performs a touch scan during the first and second touch scan periods TST1 and TST2 to generate touch raw data RawD, and the touch micro controller unit 240 generates touch coordinates RTC based on the touch raw data and outputs the touch coordinates RTC to the host. In this case, since the touch scan is performed during the first and second touch scan periods TST1 and TST2 to generate the touch coordinates, the touch micro controller unit 240 may output the touch coordinates RTC to the host according to the touch report rate of 120 Hz

In FIG. 8, it is shown that the second touch synchronization signal Tsync2 includes the preamble period PA, but this is only an example, and since a difference between the first frequency and the second frequency is large, that is, 60 Hz, the preamble period PA may be omitted.

FIG. 9 is a view showing a timing of a second touch synchronization signal according to a third embodiment of the present disclosure when the display refresh rate changes from the first frequency to the second frequency. In FIG. 9, it is assumed that the first frequency is 120 Hz and the second frequency is 30 Hz.

As shown in FIG. 9, when the display refresh rate decreases from 120 Hz to 30 Hz, the touch synchronization signal generation circuit 214 generates a second touch synchronization signal Tsync2 including a preamble period PA having the second level (the high level), a first touch scan period TST1 having the first level (the low level), a display driving period DDT having the second level (the high level), a preamble period PA having the second level (the high level), a plurality of second touch scan periods TST2 having the first level (the low level), and a dummy blank period DBLANK having the second level (the high level).

That is, in an example shown in FIG. 9, as the second touch synchronization signal according to the third embodiment of the present disclosure includes three second touch scan periods TST2 within one dummy blank period DBLANK, the touch report rate may be maintained regardless of the variation in the display frame rate.

Specifically, the touch driver 235 performs a touch scan during the first and second touch scan periods TST1 and TST2 to generate touch raw data RawD, and the touch micro controller unit 240 generates touch coordinates RTC based on the touch raw data and outputs the touch coordinates RTC to the host. In this case, since the touch scan may be performed during the first and second touch scan periods TST1 and TST2 to generate the touch coordinates, the touch micro controller unit 240 may output the touch coordinates RTC to the host according to the touch report rate of 120 Hz

In FIG. 9, it is shown that the second touch synchronization signal Tsync2 includes the preamble period PA, but this is only an example, and since a difference between the first frequency and the second frequency is large, that is, 90 Hz, the preamble period PA may be omitted.

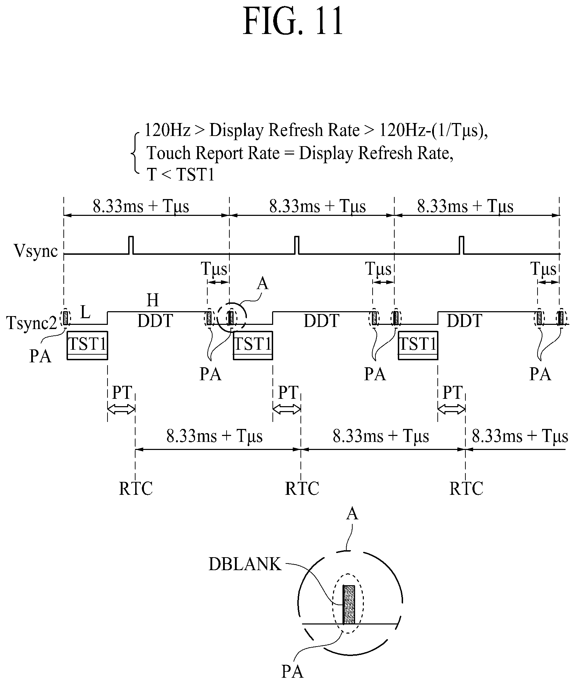

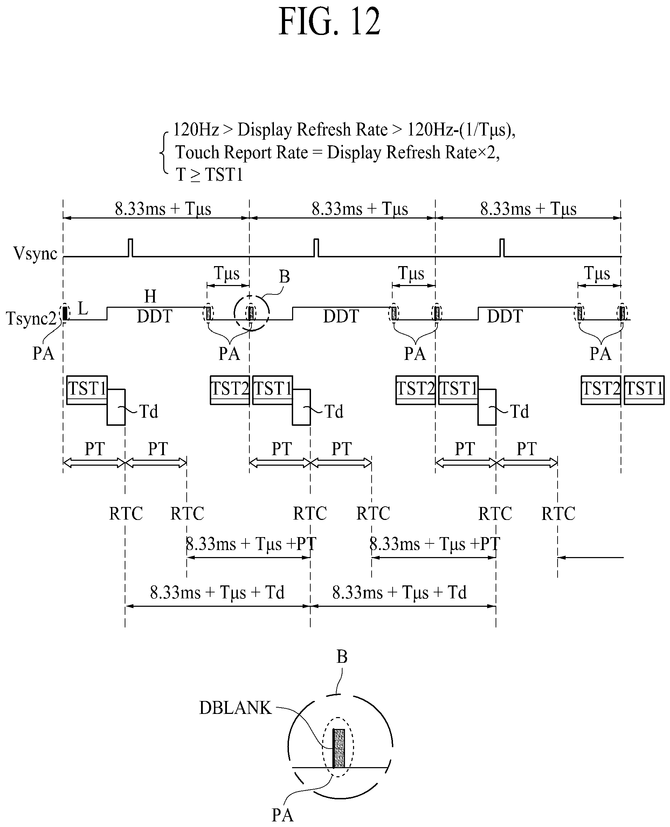

FIG. 10 is a view showing a timing of a second touch synchronization signal according to a fourth embodiment of the present disclosure when the display refresh rate changes from the first frequency to the second frequency, FIG. 11 is a view showing a timing of a second touch synchronization signal according to a fifth embodiment of the present disclosure when the display refresh rate changes from the first frequency to the second frequency, and FIG. 12 is a view showing a timing of a second touch synchronization signal according to a sixth embodiment of the present disclosure when the display refresh rate changes from the first frequency to the second frequency. In FIGS. 10 to 12, it is assumed that the first frequency is 120 Hz and the second frequency is a frequency in a range less than 120 Hz and greater than 120 Hz-(1/T µs). In this case, T µs means a predetermined margin period.

Referring to FIG. 10, since a difference between the first frequency and the second frequency is very small, a dummy blank period DBLANK is set very short, and the margin period T µs is set shorter than a first touch scan period TST1. That is, the touch synchronization signal generation circuit 214 generates a second touch synchronization signal Tsync2 including a first touch scan period TST1 maintained at the first level, a display driving period DDT maintained at the second level, a margin period T µs maintained at the first level, and a dummy blank period DBLANK which transitions to the second level for a very short time.

In FIG. 10, since the margin period T µs is set shorter than the first touch scan period TST1, the touch driver 235 cannot perform a touch scan for all touch electrodes TE included in the panel 120 during the margin period T µs. However, since the dummy blank period DBLANK is set very short, the touch micro controller unit 240 reports touch coordinates RTC according to the touch report rate having the second frequency, but since a difference between the first frequency and the second frequency is not large, the deterioration of the touch performance may not be large.

However, in the case of FIG. 10, since the dummy blank period DBLANK is set very short, the touch driver 235 may not accurately recognize a first touch scan period TST1 of a next frame.

Accordingly, in order to solve this problem, as shown in FIG. 11, the touch synchronization signal generation circuit 214 generates a second touch synchronization signal Tsync2 including a preamble period PA having the second level (the high level), a first touch scan period TST1 having the first level (the low level), a display driving period DDT having the second level (the high level), a preamble period PA having the second level (the high level), a margin period T µs having the first level (the low level), and a dummy blank period DBLANK which transitions to the second level for a very short time.

Accordingly, the touch micro controller unit 240 may report the touch coordinate RTC according to the touch report rate having the second frequency, and in addition, the touch driver 235 may accurately recognize the first touch scan period TST1 of the next frame through the preamble period PA.

Meanwhile, in the case of FIGS. 10 and 11, since the margin period T µs is set shorter than the first touch scan period TST1, the touch driver 235 may not perform a touch scan for all touch electrodes TE included in the panel 120 during the margin period T µs. However, as shown in FIG. 12, when a margin period T µs is set to a length longer than or equal to a first touch scan period TST1, the touch driver 235 may perform a touch scan even during the margin period T µs. According to the embodiment, the margin period T µs may operate as a second touch scan period TST2.

Specifically, referring to FIG. 12, since a difference between the first frequency and the second frequency is very small, a dummy blank period DBLANK is set very short, and the margin period T µs is set to be longer than or equal to the first touch scan period TST1. That is, the touch synchronization signal generation circuit 214 generates a second touch synchronization signal Tsync2 including a preamble period PA having the second level (the high level), a first touch scan period TST1 having the first level (the low level), a display driving period DDT having the second level (the high level), a preamble period PA having the second level (the high level), a margin period T µs (or a second touch scan period TST2) having the first level (the low level), and a dummy blank period DBLANK which transitions to the second level for a very short time.

In this case, when the touch micro controller unit 240 calculates each touch coordinate RTC for each first touch scan period TST1, a delay time Td may occur. The delay time Td may be a concept included in the processing time PT.

In FIG. 12, since the margin period T µs is set to be longer than or equal to the first touch scan period TST1, the touch driver 235 may perform a touch scan for all touch electrodes TE included in the panel 120 during the margin period T µs. Accordingly, the touch micro controller unit 240 may report the touch coordinates RTC according to the touch report rate having a frequency that is twice the second frequency.

Further, the touch driver 235 may also accurately recognize the first touch scan period TST1 of the next frame through the preamble period PA.

According to the present disclosure, as a touch synchronization signal, which allows an additional touch scan when a display refresh rate varies, is generated, there is an effect that a touch report rate can be maintained at a constant level even in a variable refresh rate mode in which the display refresh rate varies.

Further, according to the present disclosure, as a touch synchronization signal including a preamble period that is distinguished from a touch scan period is generated, since a touch report rate can be stably maintained even when a degree of variation in the display refresh rate is very small, there is an effect that touch sensing performance can be enhanced.

It will be apparent to those skilled in the art that various modifications and variations can be made in the present disclosure without departing from the spirit or scope of the disclosures. Thus, it is intended that the present disclosure covers the modifications and variations of this disclosure.

The various embodiments described above can be combined to provide further embodiments. These and other changes can be made to the embodiments in light of the above-detailed description. In general, in the following claims, the terms used should not be construed to limit the claims to the specific embodiments disclosed in the specification and the claims, but should be construed to include all possible embodiments along with the full scope of equivalents to which such claims are entitled. Accordingly, the claims are not limited by the disclosure.

## Claims

1. A touch display driving device comprising:
a timing controller that generates a first touch synchronization signal including a first touch scan period and a display driving period when operating in a default mode in which a display refresh rate is a first frequency, and a second touch synchronization signal including the first touch scan period, the display driving period, a second touch scan period, and a dummy blank period when operating in a variable refresh rate mode in which the display refresh rate decreases from the first frequency to a second frequency;
a touch driver that performs a touch scan during the first and second touch scan periods to generate touch raw data; and
a touch micro controller unit that generates touch coordinates based on the touch raw data and reports the generated touch coordinates according to a touch report rate.

2. The touch display driving device of claim 1, wherein the timing controller includes:
a detection circuit that detects a change in the display refresh rate based on a vertical synchronization signal (Vsync) and generates a detection signal; and
a touch synchronization signal generation circuit that generates the first and second touch synchronization signals based on the detection signal.

3. The touch display driving device of claim 1 or 2, wherein the first touch scan period is a period in which the first and second touch synchronization signals are maintained at a first level,
the display driving period is a period in which the first and second touch synchronization signals are maintained at a second level different from the first level,
the second touch scan period is a period in which the second touch synchronization signal is maintained at the first level, and
the dummy blank period is a period in which the second touch synchronization signal is maintained at the second level.

4. The touch display driving device of claim 3, wherein the timing controller generates the second touch synchronization signal further including a preamble period maintained at the second level for a predetermined time before the first and second touch scan periods when operating in the variable refresh rate mode.

5. The touch display driving device of claim 4, wherein the timing controller includes the preamble period in the second touch synchronization signal when a difference between the first frequency and the second frequency is less than or equal to a reference value.

6. The touch display driving device of claim 4 or 5, wherein the preamble period is set to be shorter than the first and second touch scan periods.

7. The touch display driving device of any one of the preceding claims, wherein the touch report rate is maintained at the first frequency in the default mode and the variable refresh rate mode.

8. The touch display driving device of any one of the preceding claims, further comprising a data driver that outputs an image according to image data received from the timing controller during the display driving period, and maintains a previously output image during the first and second touch scan periods and the dummy blank period.

9. The touch display driving device of claim 8, wherein the touch driver and the data driver are implemented as a single chip.

10. The touch display driving device of any one of the preceding claims, wherein the touch driver generates the touch raw data based on response signals output from a plurality of touch electrodes included in an in-cell type panel for each of the first and second touch scan periods.

11. A touch display driving method comprising:
generating a first touch synchronization signal including a first touch scan period and a display driving period when operating in a default mode in which a display refresh rate is a first frequency;
performing a touch scan during the first touch scan period to generate touch coordinates, and reporting the touch coordinates according to a touch report rate;
generating a second touch synchronization signal including the first touch scan period, the display driving period, a second touch scan period, and a dummy blank period when operating in a variable refresh rate mode in which the display refresh rate changes from the first frequency to a second frequency; and
performing a touch scan during the first and second touch scan periods to generate touch coordinates and reporting the touch coordinates according to the touch report rate.

12. The touch display driving method of claim 11, wherein the first touch scan period is a period in which the first and second touch synchronization signals are maintained at a first level,
the display driving period is a period in which the first and second touch synchronization signals are maintained at a second level different from the first level,
the second touch scan period is a period in which the second touch synchronization signal is maintained at the first level, and
the dummy blank period is a period in which the second touch synchronization signal is maintained at the second level.

13. The touch display driving method of claim 12, wherein the second touch synchronization signal further includes a preamble period maintained at a second level for a predetermined time before the first and second touch scan periods.

14. The touch display driving method of claim 13, wherein the preamble period is included in the second touch synchronization signal when a difference between the first frequency and the second frequency is less than or equal to a reference value.

15. The touch display driving method of any one of claims 11 to 14, wherein the touch report rate is maintained at the first frequency in the default mode and the variable refresh rate mode.

## Amended claims

### Amended claims in accordance with Rule 137(2) EPC.

**1.** A touch display driving device (110) comprising:
a timing controller (210) that generates a first touch synchronization signal (Tsync1) including a first touch scan period (TST1) and a display driving period (DDT) when operating in a default mode in which a display refresh rate is a first frequency, and a second touch synchronization signal (Tsync2) including the first touch scan period (TST1), the display driving period (DDT), a second touch scan period (TST2), and a dummy blank period (DBLANK) when operating in a variable refresh rate mode in which the display refresh rate decreases from the first frequency to a second frequency,
wherein the dummy blank period (DBLANK) is a vertical blank period increased due to the variation of the display refresh rate from the first frequency to the second frequency, and
wherein the second touch scan period (TST2) is located between the display driving period (DDT) and the dummy blank period (DBLANK), and maintains a touch report rate at the first frequency when the display refresh rate decreases from the first frequency to the second frequency;
a touch driver (235) that performs a touch scan during the first and second touch scan periods to generate touch raw data; and
a touch micro controller unit (240) that generates touch coordinates based on the touch raw data and reports the generated touch coordinates according to a touch report rate.

**2.** The touch display driving device (110) of claim 1, wherein the timing controller (210) includes:
a detection circuit (212) that detects a change in the display refresh rate based on a vertical synchronization signal (Vsync) and generates a detection signal (DET); and
a touch synchronization signal generation circuit (214) that generates the first and second touch synchronization signals based on the detection signal (DET).

**3.** The touch display driving device of claim 1 or 2, wherein the first touch scan period is a period in which the first and second touch synchronization signals are maintained at a first level,
the display driving period is a period in which the first and second touch synchronization signals are maintained at a second level different from the first level,
the second touch scan period is a period in which the second touch synchronization signal is maintained at the first level, and
the dummy blank period is a period in which the second touch synchronization signal is maintained at the second level.

**4.** The touch display driving device of claim 3, wherein the timing controller generates the second touch synchronization signal further including a preamble period maintained at the second level for a predetermined time before the first and second touch scan periods when operating in the variable refresh rate mode.

**5.** The touch display driving device (110) of claim 4, wherein the timing controller (210) includes the preamble period in the second touch synchronization signal (Tsync2) when a difference between the first frequency and the second frequency is less than or equal to a reference value.

**6.** The touch display driving device (110) of claim 4 or 5, wherein the preamble period is set to be shorter than the first and second touch scan periods.

**7.** The touch display driving device (110) of any one of the preceding claims, wherein the touch report rate is maintained at the first frequency in the default mode and the variable refresh rate mode.

**8.** The touch display driving device (110) of any one of the preceding claims, further comprising a data driver that outputs an image according to image data received from the timing controller (210) during the display driving period (DDT), and maintains a previously output image during the first and second touch scan periods and the dummy blank period (DBLANK).

**9.** The touch display driving device (110) of claim 8, wherein the touch driver (235) and the data driver are implemented as a single chip.

**10.** The touch display driving device (110) of any one of the preceding claims, wherein the touch driver (235) generates the touch raw data based on response signals output from a plurality of touch electrodes included in an in-cell type panel for each of the first and second touch scan periods.

**11.** A touch display driving method comprising:
generating a first touch synchronization signal (Tsync1) including a first touch scan period (TST1) and a display driving period (DDT) when operating in a default mode in which a display refresh rate is a first frequency;
performing a touch scan during the first touch scan period (TST1) to generate touch coordinates, and reporting the touch coordinates according to a touch report rate;
generating a second touch synchronization signal (Tsync2) including the first touch scan period (TST1), the display driving period (DDT), a second touch scan period (TST2), and a dummy blank period (DBLANK) when operating in a variable refresh rate mode in which the display refresh rate changes from the first frequency to a second frequency,
wherein the dummy blank period (DBLANK) is a vertical blank period increased due to the variation of the display refresh rate from the first frequency to the second frequency, and wherein the second touch scan period (TST2) is located between the display driving period (DDT) and the dummy blank period (DBLANK); and
performing a touch scan during the first and second touch scan periods to generate touch coordinates and reporting the touch coordinates according to the touch report rate,
wherein the touch report rate at the first frequency is maintained when the display refresh rate changes from the first frequency to the second frequency.

**12.** The touch display driving method of claim 11, wherein the first touch scan period is a period in which the first and second touch synchronization signals are maintained at a first level,
the display driving period is a period in which the first and second touch synchronization signals are maintained at a second level different from the first level,
the second touch scan period is a period in which the second touch synchronization signal is maintained at the first level, and
the dummy blank period is a period in which the second touch synchronization signal is maintained at the second level.

**13.** The touch display driving method of claim 12, wherein the second touch synchronization signal further includes a preamble period maintained at a second level for a predetermined time before the first and second touch scan periods.

**14.** The touch display driving method of claim 13, wherein the preamble period is included in the second touch synchronization signal (Tsync2) when a difference between the first frequency and the second frequency is less than or equal to a reference value.

**15.** The touch display driving method of any one of claims 11 to 14, wherein the touch report rate is maintained at the first frequency in the default mode and the variable refresh rate mode.

**1.** A touch display driving device (110) comprising:
a timing controller (210) that generates a first touch synchronization signal (Tsync1) including a first touch scan period (TST1) and a display driving period (DDT) when operating in a default mode in which a display refresh rate is a first frequency, and a second touch synchronization signal (Tsync2) including the first touch scan period (TST1), the display driving period (DDT), a second touch scan period (TST2), and a dummy blank period (DBLANK) when operating in a variable refresh rate mode in which the display refresh rate decreases from the first frequency to a second frequency;
a touch driver (235) that performs a touch scan during the first and second touch scan periods to generate touch raw data; and
a touch micro controller unit (240) that generates touch coordinates based on the touch raw data and reports the generated touch coordinates according to a touch report rate,
wherein the timing controller (210) generates the second touch synchronization signal (Tsync2) further including a preamble period (PA) maintained for a predetermined time before the first and second touch scan periods when operating in the variable refresh rate mode.

**2.** The touch display driving device (110) of claim 1, wherein the timing controller (210) includes:
a detection circuit (212) that detects a change in the display refresh rate based on a vertical synchronization signal (Vsync) and generates a detection signal (DET); and
a touch synchronization signal generation circuit (214) that generates the first and second touch synchronization signals based on the detection signal (DET).

**3.** The touch display driving device of claim 1 or 2, wherein the first touch scan period (TST1) is a period in which the first and second touch synchronization signals (Tsync1 and Tsync2) are maintained at a first level,
the display driving period (DDT) is a period in which the first and second touch synchronization signals (Tsync1 and Tsync2) are maintained at a second level different from the first level,
the second touch scan period (TST2) is a period in which the second touch synchronization signal (Tsync2) is maintained at the first level, and
the dummy blank period (DBLANK) is a period in which the second touch synchronization signal (Tsync2) is maintained at the second level.

**4.** The touch display driving device (110) of claim 3, wherein the timing controller (210) generates the second touch synchronization signal (Tsync2) further including a preamble period (PA) maintained at the second level for a predetermined time before the first and second touch scan periods when operating in the variable refresh rate mode.

**5.** The touch display driving device (110) of claim **4,** wherein the timing controller (210) includes the preamble period in the second touch synchronization signal (Tsync2) when a difference between the first frequency and the second frequency is less than or equal to a reference value.

**6.** The touch display driving device (110) of claim 4 or 5, wherein the preamble period is set to be shorter than the first and second touch scan periods.

**7.** The touch display driving device (110) of any one of the preceding claims, wherein the touch report rate is maintained at the first frequency in the default mode and the variable refresh rate mode.

**8.** The touch display driving device (110) of any one of the preceding claims, further comprising a data driver that outputs an image according to image data received from the timing controller (210) during the display driving period (DDT), and maintains a previously output image during the first and second touch scan periods and the dummy blank period (DBLANK).

**9.** The touch display driving device (110) of claim 8, wherein the touch driver (235) and the data driver are implemented as a single chip.

**10.** The touch display driving device (110) of any one of the preceding claims, wherein the touch driver (235) generates the touch raw data based on response signals output from a plurality of touch electrodes included in an in-cell type panel for each of the first and second touch scan periods.

**11.** A touch display driving method comprising:
generating a first touch synchronization signal (Tsync1) including a first touch scan period (TST1) and a display driving period (DDT) when operating in a default mode in which a display refresh rate is a first frequency;
performing a touch scan during the first touch scan period (TST1) to generate touch coordinates, and reporting the touch coordinates according to a touch report rate;
generating a second touch synchronization signal (Tsync2) including the first touch scan period (TST1), the display driving period (DDT), a second touch scan period (TST2), and a dummy blank period (DBLANK) when operating in a variable refresh rate mode in which the display refresh rate changes from the first frequency to a second frequency,
wherein the second touch synchronization signal (Tsync2) further includes a preamble period (PA) maintained for a predetermined time before the first and second touch scan periods.; and
performing a touch scan during the first and second touch scan periods to generate touch coordinates and reporting the touch coordinates according to the touch report rate.

**12.** The touch display driving method of claim 11, wherein the first touch scan period (TST1) is a period in which the first and second touch synchronization signals (Tsync1 and Tsync2) are maintained at a first level,
the display driving period (DDT) is a period in which the first and second touch synchronization signals (Tsync1 and Tsync2) are maintained at a second level different from the first level,
the second touch scan period (TST2) is a period in which the second touch synchronization signal (Tsync2) is maintained at the first level, and
the dummy blank period (DBLANK) is a period in which the second touch synchronization signal (Tsync2) is maintained at the second level.

**13.** The touch display driving method of claim 12, wherein the second touch synchronization signal (Tsync2) further includes a preamble period (PA) maintained at a second level for a predetermined time before the first and second touch scan periods (TST1 and TST2).

**14.** The touch display driving method of claim 13, wherein the preamble period (PA) is included in the second touch synchronization signal (Tsync2) when a difference between the first frequency and the second frequency is less than or equal to a reference value.

**15.** The touch display driving method of any one of claims 11 to 14, wherein the touch report rate is maintained at the first frequency in the default mode and the variable refresh rate mode.
